# EUROPEAN PATENT APPLICATION

(11) **EP 1 657 053 A1**
(43) Date of publication of application: **17.05.2006**
(21) Application number: 05292422.2
(22) Date of filing: 15.11.2005
(51) Int. Cl.: B32B 5/12, B32B 27/08, E02D 9/02

(54) **Sheet for civil engineering and construction**

(30) Priority: 16.11.2004 JP 2004331974
(71) Applicant: NIPPON SHOKUBAI CO., LTD., Osaka-shi, Osaka 541-0043 (JP)
(72) Inventor: Okamoto, Koichi, Osaka-shi, Osaka 534-0011 (JP)
(74) Representative: Hart Davis, Jason

(57) **Abstract**

To provide a sheet for civil engineering and construction, which has remarkably improved pulling property and enables the field work to be carried out efficiently and easily.

A sheet for civil engineering and construction comprising a lubricant layer sandwiched between two or more substrates, whereinat least one of the substrates has a coefficient of kinetic friction (µ) of 0.45 or lower; and a sheet for civil engineering and construction comprising a lubricant layer sandwiched between two or more substrates, wherein at least one of the substrates is a lattice-like substrate.

## Description

### Field of the Invention

The present invention relates to a sheet for civil engineering and construction and more specifically to a sheet for civil engineering and construction which is used, for example, in a work of pulling a steel material from ground or a hydraulic composition in construction and civil engineering fields.

### Background of the Invention

If a structure such as an earth-retaining wall is embedded in the ground on a foundation work of construction and civil engineering fields, a method of embedding a steel material (support) such as a steel sheet pile directly in the ground is commonly employed. After the steel material is embedded in the ground, if necessary, a hydraulic composition such as cement milk and ready-mixed concrete is injected in the ground or after a drilling hole is formed and the hydraulic composition is injected, a wide flange beam is embedded as the steel material (core material) . Whether or not the hydraulic composition is used depends on groundwater around the ground where the foundation work is carried out.

It is desired that a steel material used for the foundation work is pulled out of the ground so as not to be an obstacle in reconstruction (development) of the underground thereafter, for example, because of leased land, or so as to use the steel material again. However, considerable labor is needed for the work of pulling the steel material out of the ground or the hydraulic composition.

Therefore, a variety of techniques for carrying out the work of pulling the steel material easily has been proposed in which lubricating oil such as wax and grease is applied to the steel material surface, or a treatment agent containing water absorbing resin is applied to the steel material surface. For example, Japanese Kokai Publication Sho-62-174418 (pages 1 and 2 and Fig. 1) discloses a water-absorbing lubricating tape having an adhesive face in the rear face and a re-wetting lubricating layer formed between the front and rear faces by kneading a water-absorbing polymer and a re-wetting binder and then drying and solidifying the mixture. And the Example describes a water-absorbing lubricating tape consisting of a nonwoven fabric, a re-wetting lubricating layer, a kraft paper, a pressure sensitive adhesive layer, and a separation paper. However, with respect to this water-absorbing lubricating tape, there is a room for contrivance to efficiently carry out the work such as the work of pulling the steel material in the civil engineering and construction fields by sufficiently improving the lubricating property in the face contacting with the steel material.

Japanese Patent No. 3274421 (pages 1 and 3) discloses a coating material in which a resin layer containing a specified alkaline water-soluble resin is formed on a substrate. If the coating material is used for the work of pulling the temporarily embeddedmaterial such as a steel material from a hardened product of a hydraulic composition, the labor (the pulling force) can be reduced in the pulling work since the alkaline water-soluble resin dissolved in water contained in the hydraulic composition gives an easily separable layer between the sheet-like substrate and the hardened product of the hydraulic composition. Therefore, the workability in the work canbe improved. However, with respect to the coating material, there is a room for contrivance to carry out the field work more easily and efficiently by improving the pulling property of the steel material from the hardened product of the hydraulic composition.

### Summary of the Invention

The present invention have made in view of the above state of the art. It is an object of the present invention to provide a sheet for civil engineering and construction, which has remarkably improved pulling property and enables the field work to be carried out efficiently and easily.

The present inventors have made various investigations about techniques for improving the pulling work. They have firstly noted that use of a sheet in place of a coating agent can simplify an application (adhesion) work to a steel material or the like and suppress occurrence of application unevenness, liquid dripping and the like, which can improve the efficiency in the entire work. And then they have noted that a sheet having a layer capable of exhibiting lubricating effect such as a Friction Cutter Sheet (registered trademark: FRC Sheet) lowers friction force between the steel material and the ground or the hardened product of the hydraulic composition owing to the lubricating effect and noted that such a sheet can be used preferably for improving the workability of the pulling work. Then, they have found that if such a sheet has a configuration in which a lubricant layer exhibiting the lubricating effect is sandwiched with two or more substrates, the lubricating effect is sufficientlyexhibitedbecause the separation of the lubricant is prevented. They have also found that if at least one of the substrates has a specified coefficient of kinetic friction, the lubricating property is remarkably improved because the surface frictional resistance is lowered, and found that synergetic effect of the above effects can considerably improve the pulling property. These findings have now led to solution of the above-mentioned problems. The present inventors also have found that if the at lest one of the substrates has a lattice-like shape, such a substrate is very useful for improvement of the workability because it can considerably improve the pulling property. That is, they have found that the use of the lattice-like substrate can give a proper contact area of the lubricant and the steel material, and found that the substrate can exhibit sufficient adhesion strength when being attached to the steel material or the like and exhibit an excellent lubricating property when being pulled, because a hole formed in the lattice-like pattern generates a so-called anchor effect. These finings have now led completion of the present invention.

That is, the present invention provides a sheet for civil engineering and construction comprising a lubricant layer sandwiched between two or more substrates, wherein at least one of the substrates has a coefficient of kinetic friction (µ) of 0.45 or lower. In other words, the present invention provides a sheet for civil engineering and construction comprising a lubricant layer and two or more substrates sandwiching the lubricant layer, wherein at least one of the substrates has a coefficient of kinetic friction (µ) of 0.45 or lower.

The present invention also provides a sheet for civil engineering and construction comprising a lubricant layer sandwiched between two or more substrates, wherein at least one of the substrates is a lattice-like substrate. In other words, the present invention also provides a sheet for civil engineering and construction comprising a lubricant layer and two or more substrates sandwiching the lubricant layer, wherein at least one of the substrates is a lattice-like substrate.

### Detailed Description of the Invention

Hereinafter, the present invention will be described in more detail.

The sheet for civil engineering and construction of the present invention is used after being attached to a structure for civil engineering and construction such as a steel material, and comprises a lubricant layer sandwiched between two or more substrates. If the substrate has such a configuration, the lubricant is sufficiently prevented from separating from the sheet. Therefore, the lubricant can sufficiently maintain and exhibit the properties, which can improve the lubricating property at the pulling work.

The sheet for civil engineering and construction preferably takes the following embodiments: (1) an embodiment in which at least one substrate has a coefficient of kinetic friction (µ) of 0.45 or lower (hereinafter referred to as embodiment (1) in some cases); or (2) an embodiment in which at least one substrate is a lattice-like substrate (hereinafter referred to as embodiment (2) in some cases). The sheet may take an embodiment in which the above embodiments are combined, that is, an embodiment in which at least one substrate is a lattice-like substrate having a coefficient of kinetic friction (µ) of 0.45 or less.

The above-mentioned at least one substrate satisfying the embodiment (1) and/or the embodiment (2) is preferably a substrate which contacts with a structure for civil engineering and construction such as a steel material, that is, a substrate which can be attached to the structure surface.

In the embodiment (1), the at least one substrate preferably has a coefficient of kinetic friction (µ) of 0.45 or lower. The use of the substrate having the coefficient of kinetic friction within such a range improves the lubricating property of the sheet for civil engineering and construction. Therefore, the workability when the sheet is pulled can be considerably improved. The coefficient is preferably 0.3 or less, more preferably 0.2 or less, and even more preferably 0.15 or less.

The above-mentioned coefficient of kinetic friction (M) is a value represented by the equation: M = F/W (F: average resistance (g); W: vertical load (g)) and the coefficient can be determined under the following measurement conditions. (Measurement conditions of coefficient of kinetic friction) Measurement apparatus: surface property measurement apparatus (HEIDON-14, manufactured by Shinto Kagaku Co., Ltd.)
Specification of a flat indenter: according to ASTM standard;
Vertical load: 100 g
Moving speed: 75 mm/minute
Specification of iron plate attached to a moving base: JIS G3141-1996, cold-rolled steel sheet, thickness 0.6×70×150 mm, manufactured by Nippon Test Panel Osaka Co., Ltd

A test specimen is wound and fixed on the flat indenter so as not to sag and the iron plate is attached to the moving base.

The substrate of the above-mentioned embodiment (1) is not particularly limited as long as it has a coefficient of kinetic friction satisfying the above-mentioned range. Examples of the material for the substrate may include a film or sheet of a synthetic resin, paper, wood, a split fiber nonwoven fabric, aneedle-punched nonwoven fabric, a fiber fabric of flat yarn, a cotton fabric, a hemp fabric, a belt-like fabric, a synthetic resin fabric, a blended yarn fabric, a metal body, a hardened body of a hydraulic composition, a coated material. Among them, a film or sheet of a synthetic resin is preferable. That is, the material for the substrate is a film or sheet of a synthetic resin. The substrate means at least one of the substrates as mentioned above.

In the above-mentioned embodiment (2), it is preferable that the at least one substrate has a lattice-like shape. Such a substrate gives a proper area contacting the lubricant layer and the steel material with each other and provides a sufficient adhesion property to a steel material or lubricating property since the hole generates the so-called anchor effect. Accordingly, the substrate can be sufficiently firmly stuck to the steel material or the like if it is attached thereto, and exhibit the lubricating property at the pulling work. Therefore, the working efficiency can be remarkably improved.

In the present invention, the term "lattice-like substrate" means a substrate inwhichholes are formedin a lattice-likepattern by continuously layering fibers (preferably long and thin fibers) vertically and horizontally. More particularly, it means a substrate having a lattice fiber coefficient within the range from 2 to 10000 , the coefficient (k; k=h/t) being calculated by dividing an average fiber width (h: mm) by an average fiber thickness (t: mm). If k is less than 2, the effect of reducing the friction in the lattice-like substrate decreases, which might reduce, for example, the pulling property to the pile. If it exceeds 10000, the adhesion to the lubricant layer decreases, which might reduce the pulling property due to separation of the lubricant layer and make it difficult to manufacture and process the sheet for civil engineering and construction of the present invention. The lower limit of the coefficient is preferably 3, more preferably 4, and most preferably 5. The upper limit of the coefficient is preferably 5000, more preferably 500, and most preferably 50.

The production method of the lattice-like substrate is not particularly limited. For example, long and thin films formed by splitting fibers (films) with a thickness of 1 mm or thinner so as to have a width of 0.1 to 10 mm are continuously layered vertically and horizontally and adhered to give a lattice-like substrate. More specifically, the lattice-like substrate (LX14; basis weight: 39 g/m³: and thickness: 0.11mm; product of Nisseki Plasto Co., Ltd.) can be produced by continuously layering long and thin films vertically and horizontally, the films being formed by splitting polyethylene films so as to have a several mm thickness and heat-sealing them. Furthermore, the substrate can be produced by continuously or successively forming many holes in a flat film by punching.

With respect to the above-mentioned lattice-like substrate, the shape of the lattice hole (the hole) basicallyhas a rectangular shape and may have other polygonal shapes such as star-like shape, a round shape (circular shape) , and an elliptical shape. Examples of the rectangular shape may include a rhombic or parallelogram shape.

With respect to the size of the lattice hole (width of the lattice), the width of the lattice has a lower limit of 0.1 mm, and an upper limit of 10 mm. If it is narrower than 0.1 mm, the pulling property might become insufficient. If it exceeds 10 mm, the layering fibers might easily separate. The lower limit is more preferably 0.5mm, and even more preferably 1 mm. The upper limit is more preferably 5 mm and even more preferably 3 mm.

The width of the long and thin fiber suitably used for the above-mentioned lattice-like substrate may be appropriately determined so that the size of the lattice hole satisfies the above-mentioned range. For example, the width of the fiber preferably has a lower limit of 0.1 mm, more preferably 0.5 mm, and even more preferably 1mm. And it preferably has an upper limit of 10 mm, more preferably 5 mm, and even more preferably 3 mm.

The material for the lattice-like substrate is not particularly limited. Examples of the material may include nylon (polyamide), polyacetal, Teflon (registered trademark) (polyethylene fluoride) , polyethylene, polycarbonate, polyvinyl chloride, polyvinylidene chloride. Among them, polyethylene is preferably used. That is, the material for the lattice-like substrate is polyethylene. The substrate means at least one of the substrates as mentioned above.

It is preferable that the above-mentioned lattice-like substrate has a coefficient of kinetic friction (µ) of 0.45 or lower. The coefficient of kinetic friction is more preferably 0.3orlower, even more preferably 0.2 or lower, and most preferably 0.15 or lower. That is, at least one of the lattice-like substrates has a coefficient of kinetic friction (µ) of 0.45 or lower. Generally, it is considered difficult to unite such a substrate with a low friction coefficient and the lubricant layer. However, they can be united if the substrate has the lattice-like shape. Therefore, the workability in the civil engineering and construction fields can be more sufficiently improved.

In the sheet for civil engineering and construction of the present invention, as long as at least one substrate satisfies the above-mentioned embodiment (1) and/or (2), other substrates are not particularly limited. However, the other substrates preferably have sufficient strength to withstand various forces externally applied in the foundation construction and the like in the civil engineering and construction fields, e.g. tensile force and shearing force caused by weight application of the steel material or the hydraulic composition; impact force and tensile force caused at the time of embedding the steel material; and friction force between the hydraulic composition and the other substrates. In other words, the other substrates are preferably formed of a material with strength enough not to be broken by such external forces. Such other substrates may be the substrate satisfying the coefficient of kinetic friction or the lattice-like substrate. And for the other substrate used maybe a synthetic resin film, paper, wood, a split fiber nonwoven fabric, a needle-punched nonwoven fabric, a fiber fabric of flat yarn, a cotton fabric, a hemp fabric, a belt-like fabric, a synthetic resin fabric, ablendedyarnfabric. Theymaybesingly and two or more of them may be used in combination (may be united) . Among them, the fiber fabric and the cotton fabric may be used in view of the efficiency of the production method mentioned below. The above-mentioned materials may have a nick or a hole and the like, if necessary. The shape, size, number and formation position of the nick or hole may be determined within the range in which the substrate can maintain strength enough not to be broken by the above-mentioned external forces. The other substrates are preferably used as a substrate which faces to the substrate contacting with the structure for civil engineering and construction such as a steel material and has the lubricant layer therebetween.

The other substrates preferably have high water permeability. Accordingly, if such a substrate is used when a water-absorbing resin is used as the lubricant layer, the water-absorbing resin is easily swollen. Therefore, adhesion of the steel material and the like to the ground and the hardened product of the hydraulic composition can be prevented, and the lubricating effect can be more sufficiently exhibited at the pulling work. The substrate with high water permeability may be formed of a material with high water permeability or have highwaterpermeability improved by being provided with the above nick or hole.

With respect to the substrates (the substrate satisfying the embodiment (1) or (2) and the other substrates) used for the sheet for civil engineering and construction of the present invention, the thickness is not particularly limited and may be set properly in accordance with the material quality (the material) or the like. For example, the thickness has a lower limit of 0.01 nun and an upper limit of 10 mm. If it is thinner than 0.01 mm, the sufficient strength to withstand the external force might not be maintained. If it exceeds 10 mm, the sheet might not be provided with sufficient flexibility and might not be excellent in handling property and storage property because the sheet becomes bulky. The lower limit is more preferably 0.05 mm and even more preferably 0.2 mm. The upper limit is more preferably 8 mm and even more preferably 5 mm.

The basis weight of the substrates may be set properly in accordance with the material quality and the thickness and the like. For example, the basis weight preferably has a lower limit of 1 g/m³ and more preferably 10 g/m³, and preferably has an upper limit of 10000 g/m³ and more preferably 1000 g/m³.

The tensile strength of the substrates is not particularly limited. For example, it is preferably 1 kgf/2.5 cm or higher. If it is less than 1 kgf/2.5 cm, the sufficient strength to withstand the external force might not be maintained. It is more preferably 10 kgf/2.5 cm or higher and even more preferably 30 kg/2.5 cm.

The above-mentioned tensile strength can be measured by the following method, for example. A test specimen is produced by cutting the substrate into a size of 2.5 cm in width and 20 cm in length and sufficiently wetting the cut substrate with ion exchanged water by immersion for 30 minutes. Using a tester of low rate extension and tensile according to the tensile test method (tensile strength) in JIS L 1096-1999 (testing methods for woven fabrics), the test specimen is subjected to the measurement under the condition of 20 mm/min in speed of testing rate of stressing and 10 cm in length of specimen between grips. It can be determined that as the value (unit: kgf/2.5 cm) measured by the tester is higher, the tensile strength of the substrate becomes higher.

In the present invention, as long as at least one of the substrates sandwiching the lubricant layer has a friction coefficient of 0.45 µm or lower or has a lattice-like shape, the other substrate sandwiching the lubricant layer is not particularly limited. The other substrate may be, for example, various kinds of steel materials (piles) and caissons. In other words, the lubricant layer is not necessarily sandwiched between two substrates before the construction, but it is preferably sandwiched at the construction. In this case, the lubricant layer is sandwiched between the substrate having either a friction coefficient of 0. 45 µm or lower or a lattice-like shape and the surface of the obj ect, such as a variety of steel materials (piles) or caissons, in which the friction needs to be lowered.

The lubricant layer of the sheet for civil engineering and construction of the present invention will be described below.

The lubricant layer is a layer containing a lubricant (a lubricating agent composition) and has a functional effect of suppressing adhesion and friction of a steel material and the like with the ground or the hydraulic composition. The lubricant is not particularly limited as long as it can exhibit the lubricating property. For example, a water-absorbing resin; oils such as a wax, a grease, tar, asphalt; and a mineral such as bentonite may be mentioned, and one or more of them may be used. Among them, the water-absorbing resin is preferable, and a resin composition containing the water-absorbing resin and water or a resin composition containing the water-absorbing resin and a binder resin for closely sticking the resin to a steel material may be also preferable. The binder resin is particularly preferably an alkaline water-soluble resin. And one of preferable embodiments of the present invention comprises the lubricating layer containing the resin composition containing the water-absorbing resin and the alkaline water-soluble resin. The resin composition may contain a solvent if necessary.

The use of the above-mentioned resin composition containing the water-absorbing resin and the alkaline water-soluble resin can lower the volume expansion when the water-absorbing resin absorbs water and is swollen, if the sheet for civil engineering and construction lies between an alkaline water hydraulic composition and a steel material and the like. Therefore, the water-absorbing resin can sufficiently exhibit the water-absorbing function, which enables the water-absorbing resin to be swollen with water sufficiently. Accordingly, the adhesion of the steel material and the like and the hardened product of the hydraulic composition are sufficiently suppressed. On the other hand, an easily separable layer can be formed between the resin composition and the ground or the hardened product of the hydraulic composition, because the alkaline water-soluble resin delays the hardening of cement on the contact face with the hydraulic composition. Therefore, the labor (pulling force) in the pulling work of the steel material from the ground or the hardened product of the hydraulic composition can be sufficiently reduced and the workability of the pulling work can be further improved.

With respect to the resin composition containing the water-absorbing resin and the alkaline water-soluble resin, the weight ratio of the water-absorbing resin and the alkaline water-soluble resin (water-absorbing resin/alkaline water-soluble resin) may properly be set in accordance with the composition and the combination of the resins and the working environments. For example, the weight ratio is preferably from 1/99 to 99/1, more preferably 10/90 to 90/10, and even more preferably 25/75 to 75/25.

The above-mentioned water-absorbing resin is preferably swollen by absorbing water and has an ion exchanged water absorption magnification 3 times or more as much as the self weight (25°C for 1 hour). More preferably, the resin has an ion exchange water absorption magnification 10 times or more. Examples of the water-absorbing resin include synthetic water-absorbing resins produced by cross-linking water-soluble or hydrophilic compounds (monomers and/or polymers), by cross-linking agents, such as crosslinked poly(meth)acrylic acid, crosslinked poly(meth)acrylylate, crosslinked poly(meth)acrylic acid esters having sulfonic acid groups, crosslinked poly(meth)acrylic acid esters having polyoxyalkylene groups, crosslinked poly(meth)acrylamide, crosslinked copolymer of (meth) acrylylate and (meth) acrylamide, crosslinked copolymer of hydroxyalkyl (meth)acrylates and (meth)acrylate, crosslinked polydioxolanes, crosslinked polyethylene oxides, crosslinked polyvinylpyrrolidone, crosslinked sulfonated polystyrenes, crosslinked polyvinylpyridine, saponified products of starch-poly(meth)acrylonitrile graft copolymers, crosslinked starch-poly(meth)acrylic acid (acrylate) graft copolymers, reaction products of polyvinyl alcohol and maleic anhydride (maleat); crosslined polyvinyl alcohol) sulfonate, polyvinyl alcohol-acrylic acid graft copolymers, and crosslinked polyisobutylene maleic acid (maleat) polymers; and natural water-swelling substances such as gelatin and agar. They may be used singly or in combination of two or more of them. Among them, the synthetic water-absorbing resins produced by cross-linking water-soluble or hydrophilic compounds by cross-linking agents are preferably used. Such a water-absorbing resin gives good balance among the swelling magnification, water-soluble components, water absorption speed, and strength and also permits easy adjustment of the balance.

The above-mentioned water-absorbing resin preferably is a water-absorbing resin having a nonionic group and/or a sulfonic acid (sulfonate) group, and more preferably a water-absorbing resin having an amido group or a hydroxyalkyl group. And examples thereof are crosslinked (meth)acrylylate-(meth)acrylamide copolymers and crosslinked hydroxyalkyl (meth)acrylate-(meth)acrylylate copolymers. Such water-absorbing resins improve water absorption property to alkaline water or water containing metal ions such as seawater. Therefore, the pulling work can be carried out remarkably easily and the friction to the ground can be reduced. Accordingly the resins are preferably used.

As the above-mentioned water-absorbing resin is also usable a resin produced by polymerizing monomer components containing water-soluble ethylenically unsaturated monomer and, if necessary a cross-linking agent. The water-absorbing resin produced by (co)polymerizing the ethyleniccally unsaturated monomer is excellent in the swelling property to water and generally economical. Therefore, the use of such a water-absorbing resin makes it possible to remarkably easily and economically carry out the work of pulling the steel material or the like. The above-mentioned cross-linking agent is not particularly limited. The water-absorbing resin may be produced also by cross-linkage by adding a cross-linking agent to linear polymers or radiating electron beam thereto.

The above-mentioned ethylenically unsaturated monomer include acrylic acid, methacrylic acid, itaconic acid, maleic acid, fumaric acid, crotonic acid, citraconic acid, vinylsulfonic acid, (meth)allylsulfonic acid, 2-(meth)acrylamide-2-methylpropanesulfonic acid, 2-(meth)acryloylethanesulfonic acid, 2-(meth)acryloyl propanesulfonic acid, and alkali metal salts or ammonium salts of these monomers; N,N-dimethylaminoethyl(meth)acrylate, and quarternized thereof; (meth) acrylamides such as (meth)acrylamide, N,N-dimethyl(meth)acrylamide, 2-hydroxyethyl(meth)acrylamide, diacetone(meth)acrylamide, N-isopropyl (meth)acrylamide, and (meth)acryloylmorpholine, and derivatives of these monomers; hydroxyalkyl(meth) acrylates such as 2-hydroxyethyl(meth)acrylate, and 2-hydroxypropyl(meth)acrylate; polyalkylene glycol mono(meth)acrylates such as polyethylene glycol mono (meth) acrylate, polypropylene glycol mono (meth) acrylate, methoxy polyethylene glycol mono(meth)acrylate, methoxy polypropylene glycol mono(meth)acrylate; N-vinyl monomers, such as N-vinyl-2-pyrrolidone and N-vinyl succinimide; N-vinyl amide monomers such as N-vinyl formamide, N-vinyl-N-methyl formamide, N-vinyl acetamide, and N-vinyl-N-methyl acetamide; and vinyl methyl ethers. One or more of them nay be used.

Among the above-mentioned ethylenically unsaturated monomers, ethylenically unsaturated monomers having a nonionic group and/or a sulfonic acid (sulfonate) group are preferable. For example, cne or more of compounds selected from 2-(meth)acrylamido-2-methylpropanesulfonic acid, 2-(meth)acryloylethanesulfonic acid, 2-(meth)acryloylpropanesulfonic acid, (meth)acrylamide, hydroxyalkyl (meth)acrylate, methoxypolyethylene glycol mono(meth)acrylate are usable. The water-absorbing resin produced by polymerizing monomer components including these monomers is preferably used because the resin is excellent particularly in the swelling property to alkaline water or water containing metal ions such as seawater. Therefore, the use of the water-absorbing resinmakes the pullingwork easy and lessens the friction to the ground.

With respect to the water-absorbing resin, if two or more kinds of the ethylenically unsaturated monomers are used in combination as the monomer components, it is preferable to adjust the ratio of the ethylenically unsaturated monomers having a nonionic group and/or a sulfonic acid (sulfonate) group in the entire monomer components to 1% by weight or more. If it is less than 1% by weight, the workability of the pulling work of the steel material or the like may no more improved. It is more preferably 10% by weight.

If two or more of the ethylenically unsaturated monomers are used in combination as the monomer components, as preferable combination, combination of (meth)acrylic acid alkali metal salts such as sodium acrylate with acrylamide; and that of (meth) acrylic acid alkali metal salts with methoxypolyethylene glycol mono(meth)acrylate may be mentioned, but it is not particularly limited.

The water-absorbing resin can be produced by (co)polymerizing the above-mentioned monomer components. However, the (co)polymerization method is not particularly limited and the (co)polymerization can be carried out by conventionally employedmethods. The average molecular weight, shape, and average particle diameter of the water-absorbing resin and the thickness and application amount of the lubricant layer containing the water-absorbing resin may be properly set in accordance with the applications of the sheet for civil engineering and construction of the present invention, work environments, and combinations with the substrates, and they are not particularlylimited. For example, the average particle diameter has an upper limit of 1000 µm. If it exceeds 1000 µm, the lubricant layer may not be excellent in the lubricating property because the application property (coating property) for forming the lubricant layer becomes insufficient and the distribution of the water-absorbing resin in the lubricant layer cannot be uniform. The upper limit is more preferably 500 µm and even more preferably 200 µm. And the lower limit is preferably 1 µm, more preferably 5 µm, and even more preferably 10 µm.

In the resin compositionpreferable for the lubricant layer, the alkaline water-soluble resin means a resin insoluble in acidic or neutral water but soluble in alkaline water. The term "neutral water" used herein means water having a pH value in the range of 6 to 8 and the term "acidic water" means water having a pH value lower than the value within the range of the neutral and "alkaline water" means water having a pH value higher than the value within the range of the neutral.

The alkaline water-soluble resin preferably has a decrease ratio calculated according the following evaluation test of 50 to 100% as an extent of the solubility in alkaline water. The decrease ratio is more preferably from 60 to 100% and even more preferably frcm 70 to 100%.

### (Evaluation test of solubility in alkaline water)

A binder resin produced by a biaxial extruder is formed into cylindrical pellet form with a diameter of 5 mm and a length of 5 mm, and then the formed body is subjected to measurement. The formed body of the resin 10 g is added to a 0.4% by weight aqueous solution of NaOH 500 g in a 1 L beaker and the mixture is stirred at 25°C and 300 rpm for 24 hours using four blades with a diameter of 40 mm. The decreased ratio of the weight of the formed body of the binder resin dissolved in the alkaline water to the weight of the added formed body is employed for the evaluation. That is, the resin remaining without being dissolved after 24 hour-stirring is separated by filtration and washed with water and dried. And then the weight is measured and the decreased ratio (%) from the weight of the binder resin before the solubility test is calculated according to the following: decreased ratio (%) = (weight before the solubility test - weight after the test) / (weight before the solubility test).

Even if the resin is not formed into pellets or has any optional formed body with 5 mm squares or smaller, it is included as the alkaline water-soluble resin as long as showing the solubility in alkaline water.

As the above-mentioned alkaline water-soluble resin are usable one or more kinds of resins selected from resins having substituent groups such as carboxyl acid groups, sulfonic acid groups, and phosphonic acid groups; novolak resins containing phenolic hydroxyl groups; and polyvinyl phenol resins. Among them, resins produced by copolymerization of α,β-unsaturated carboxylic acid monomers and vinyl monomers other than the α,β-unsaturated carboxylic acid monomers are preferable since they are excellent in the solubility in alkaline water, economic property, and various physical properties in a resin composition.

And cellulose derivatives such as hydroxypropyl methyl cellulose phthalate, hydroxypropyl methyl cellulose acetate succinate, cellulose acetate hexahydrophthalate, hydroxypropyl methyl cellulose acetate phthalate, hydroxypropyl methyl cellulose hexahydrophthalate which are resins having carboxyl acid groups may be also used.

Examples of the α,β-unsaturated carboxylic acid monomers include α,β-unsaturated monocarboxylic acids such as acrylic acid and methacrylic acid; α,β-unsaturated dicarboxylic acids such as itaconic acid, maleic acid, and fumaric acid; α,β-unsaturated dicarboxylic anhydrides such as maleic anhydride and itaconic anhydride; and α,β-unsaturated dicarboxylic acid monoesters such as maleic acid monoester, fumaric acid monoester, and itaconic acid monoester. And one or more of them may be used. Among them, acrylic acid and/or methacrylic acid is preferable since being excellent in the flexibility and toughness.

Examples of the vinyl monomers are esters of (meth) acrylic acid with monohydric alcohols having 1 to 18 carbon atoms such as methyl acrylate, ethyl acrylate, propyl acrylate, butyl acrylate, stearyl acrylate, methyl methacrylate, ethyl methacrylate, propyl methacrylate, butyl methacrylate, and stearyl methacrylate; nitryl group-containing vinyl monomers such as acrylonitrile and methacrylonitrile; amido group-containing vinyl monomers such as acrylamide and methacrylamide; hydroxyl group-containing vinyl monomers such as hydroxyethyl acrylate and hydroxypropyl methacrylate; epoxy group-containing vinyl monomers such as glycidyl methacrylate; α, β-unsaturatedcarboxylic acidmetal salts such as zinc acrylate and zinc methacrylate; aromatic vinyl monomers such as styrene and α-methylstyrene; aliphatic vinyl monomers such as vinyl acetate; halogen group-containing vinyl monomers such as vinyl chloride, vinylbromide, vinyl iodide, and vinylidene chloride; allyl ethers; maleic acid derivatives such as maleic anhydride, maleic acid monoalkyl esters, and maleic acid dialkyl esters; fumaric acid derivatives such as fumaric acid monoalkyl esters and fumaric acid dialkyl esters; maleimide derivatives such as maleimide, N-methylmaleimide, N-stearylmaleimide, N-phenylmaleimide, and N-cyclohexylmaleimide; itaconic acid derivatives such as itaconic acid monoalkyl esters, itaconic acid dialkyl esters, itaconamides, itaconimides, and itaconamido esters; alkenes such as ethylene and propylene; and dienes such as butadiene and isoprene. One or more of them may be used.

Among these vinyl monomers, acrylic acid alkyl esters and/or methacrylic acid alkyl esters are preferable since they are excellent in flexibility, weathering resistance, and toughness. More preferable are (meth) acrylic acid alkyl esters produced by esterification of (meth) acrylic acid with monohydric alcohols having 1 to 18 carbon atoms. The use amount of the (meth)acrylic acid alkyl esters is preferably in the range of 30 to 100% by weight to 100% by weight of the entire vinyl monomers used and thereby the flexibility, weathering resistance, and toughness of the resin composition can be further improved. The use amount is more preferably in the range of 50 to 100% by weight.

With respect to the weight ratio of the α,β-unsaturated carboxylic acid monomer and the vinyl monomer, it is preferable that the α, β-unsaturated carboxylic acid monomer is 9% by weight or more to 100% by weight of the total amount of these monomers. And thereby the solubility in alkaline water can be further improved. The weight ratio of the α,β-unsaturated carboxylic acid monomer is more preferably in the range of 9 to 40% by weight. In this case, an alkaline water-soluble resin excellent in not only the solubility in alkaline water but also the flexibility, weathering resistance, and toughness can be produced.

The alkaline water-soluble resin can be produced by (co)polymerization of the above-mentioned monomer components such as the α,β-unsaturated carboxylic acid monomers and the vinyl monomers, and it can be carried out by conventionally employed methods.

With respect to the above-mentioned binder resin such as the alkaline water-soluble resin, the weight average molecular weight (Mw) may be properly set in accordance with the compositions of the soil composing the ground and the hydraulic composition, pH of the alkaline water, and the working environments. The weight average molecular weight preferably has a lower limit of 10000 and an upper limit of 2000000. If it is within the range, the adhesion property to the steel material and the workability can be more sufficiently exhibited. The lower limit is preferably 30000, more preferably 50000, and particularly preferably 100000. The upper limit is preferably 1500000, more preferably 1000000, and particularly preferably 900000.

The weight average molecular weight (Mw) is a value measured by a high speed GPC apparatus HLC-8120 GPC (manufactured by Tosoh Corp.) using a TSK standard polystyrene PS-oligomer kit (manufactured by Tosoh Corp.) as a standard substance for molecular weight calibration and tetrahydrofuran (containing a stabilizer) (special grade chemicals: manufactured by Wako Pure Chemical Industries Ltd.) as a solvent.

The acid value (mg KOH/g) of the above-mentioned binder resin is preferably 15 or higher. If it is lower than 15, the pulling property of the pile and the friction reducing effect might be decreased and it may become impossible to make the pulling work easy, because the solubility in alkaline water is deteriorated. The acid value is more preferably 30 or higher, furthermore preferably 50 or higher, andparticularlypreferably 70 or higher. On the other hand, it is preferably 500 or lower. If it exceeds 500, the binder resin might be dissolved and damaged when it contacts with water such as rain water having a pH in a neutral or acidic region because the binder resin has insufficient durability. Therefore, it may become impossible to efficiently carry out the work of embedding the steel material or the work of pulling the material,

With respect to the glass transition temperature of the above-mentioned binder resin, the binder resin preferably has at least one glass transition temperature (Tg) in the range of -80 to 120°C in view of the adhesion to the steel material surface and the toughness of the resin composition when the steel material is embedded in soil. And more preferably the resin has two or more glass transition temperatures (Tg) in the range of -80 to 120°C. The adjustment of the glass transition temperature within the range makes the strength and the flexibility of the lubricant layer sufficient and improves the workability. The binder resin has particularly preferably two or more glass transition temperatures: one Tg in the lower temperature range of -30 to 20°C and two or more Tgs in a higher temperature range of 40 to 100°C. And thereby, the balance of the softening component and the shape holding component can be more improved.

The glass transition temperature means a peak top (an inflection point of a DSC curve) of a DSC differential curve determined by differential scanning calorimetry (DSC).

The solvent added in the resin composition preferable for the lubricant layer is not particularly limited, and solvents commonly used for coating materials may be used. More specifically, one or more solvents selected from alcohols such as methanol, ethanol, and isopropyl alcohol; aromatic hydrocarbons such as benzene and toluene; ketones such as acetone and methyl ethyl ketone; aliphatic esters such as ethyl acetate and butyl acetate; ethylene glycol derivatives such as ethylene glycol, ethylene glycol monomethyl ether; propylene glycol derivatives such as propylene glycol monomethyl ether and propylene glycol monomethyl ether acetate may be used. The medium contained in the binder resin may be used as the solvent.

The solvent (medium) preferably has a property of dissolving the binder resin. If the solvent can dissolve the binder resin therein, the binder resin can be more homogeneously dispersed in the resin composition and therefore it can preferably exhibit the properties as the binder resin. As the solvent for dissolving the binder resin therein, a polar solvent is preferably used. In view of the binder solubility, at least one solvent selected from alcohols, ketones, aliphatic esters, and alkylene glycols is more preferable.

The above-mentioned resin composition may contain other resins and additives such as a pigment, a surfactant, a variety of stabilizers, and a variety of fillers unless the effects are sacrificed.

The configuration of the sheet for civil engineering and construction of the present invention is not particularly limited as long as the lubricant layer is sandwiched with two or more substrates. Also, the production method is not particularly limited, but it is preferable that the sheet is continuously produced. For example, if two substrates are used, the sheet for civil engineering and construction comprising the lubricant layer between the two substrates is preferably produced by attaching a lubricant composition to one substrate (substrate a) and simultaneously or before the composition is dried, continuously laminating the other substrate (the substrate b) on the lubricant composition. If the lattice-like substrate is used, it is preferable that the substrate b is used as the lattice-like substrate. This method enables the steps of forming the lubricant layer and attaching the substrates to be performed simultaneously. Therefore, the sheet can be produced continuously, which leads to the improvement in the productivity. If the lattice-like substrate is used, the anchor effect generated by the hole allows the lattice-like substrate to be attached without using any binder. As described, the above-mentioned production method of the sheet for civil engineering and construction comprising the steps of attaching the lubricant composition to one substrate and simultaneously or before the composition is dried, continuously laminating the other substrate on the lubricant composition is also one of preferable embodiments of the present invention.

With respect to the sheet for civil engineering and construction, the method of forming the lubricant layer on the substrate surface may be properly selected in accordance with the lubricant layer and the material of the substrate, and it isnotparticularlylimited. For example,an application method with an application apparatus, a spraying application method, a brush coating method, a roller coating method and besides these methods, a method of impregnating the substrate with a solution containing the lubricant may be exemplified. More specifically, if the resin composition containing the alkaline water-soluble resin and the water-absorbing resin is used, the following methods may be mentioned: a method of spraying a dispersion (a resin solution) produced by dispersing (or dissolving) the alkaline water-soluble resin and the water-absorbing resin in a dispersant such as an organic solvent and water to the substrate surface; a method of applying the resin solution by a brush or a roller; a method of impregnating the substrate with the resin solution; and a method comprising the steps of spraying or applying a solution or a dispersion containing the alkaline water-soluble resin to the substrate surface and then spraying the water-absorbing resin to the surface uniformly and further spraying or applying the solution or the dispersion thereto.

The thickness of the above-mentioned lubricant layer is not particularly limited and may be properly set in accordance with the components or the like. For example, the thickness preferably has a lower limit of 0.01 mm and an upper limit of 5 mm. If it is thinner than 0.01 mm, the functional effects of the respective layers might not be sufficiently exhibited. If it exceeds 5 mm, the handling ability and the storage stability of the sheet might become insufficient. The lower limit is more preferably 0.02 mm and even more preferably 0.05 mm. And the upper limit is more preferably 1mm and even more preferably 0.5 mm.

The ratio of the lubricant layer to the substrate, that is, the application amount of the lubricant to the unit area of the substrate may be set in accordance with the composition and combination of the substrate and the lubricant layer, the work environments and the like, and it is not particularly limited. For example, it is preferably in the range of 1 to 10000 g/m², more preferably in the range of 10 to 5000 g/m², and even more preferably in the range of 20 to 1000 g/m². The ratio of the lubricant to the substrate 100 parts by weight is preferably in the range of 1 to 10000 parts by weight, more preferably 10 to 1000 parts by weight, and even more preferably 20 to 500 parts by weight.

The sheet for civil engineering and construction of the present invention is preferably used for the steel material used in a foundation work. The term "the steel material" used herein means an embedded material (a substrate embedded in the ground) , which is used for constructing ground and foundation structure such as an earth-retaining wall and base in the foundation work of the civil engineering and construction fields, and preferably separated from the ground or the hardened hydraulic composition. Examples of the steel material may include a steel pipe, a hume pipe, a wide flange beam, an I beam, a steel pipe pile, a steel pole, a concrete pile, a pole, a cylindrical pile (a hollow pile) , a steel sheet pile which is a longplate-likepile, andacorrugated plate. Among them, the sheet for civil engineering and construction is preferably used for the wide flange beam and the steel sheet pile. The shape, length, material, and surface roughness of the steel material are not particularly limited. The steel material may have rust and stain on the surface or immaculate smooth surface. The sheet is also used preferably for amold formused for productionprocess of a concrete secondary product. If using the sheet for the mold form, recycling efficiency of the mold form can be improved because the hardened product and the like can be easily and efficiently separated from the mold form, which leads to high production efficiency. Furthermore, the sheet for civil engineering and construction may be preferably used as a slipping material used for horizontally moving a box culvert and a water gate and the like, and as a sheet material for reducing negative friction by being attached to the surface of a variety of piles such as a wide flange beam, a steel sheet pile, a steel pipe, and a concrete pile each embedded in the ground. Furthermore, the sheet may be preferably used as a material for lessening the friction with the ground in a caissonmethod (tanks, water storage tanks, bridge piers, upright piles) or a jacking method. Among them, the sheet is particularly preferably used as a sheet material for pulling and removing the pile or for reducing negative friction since the sheet is excellent in the pulling property (the friction reducing property) to the pile.

The sheet for civil engineering and construction is preferable used as a friction reducing material or an adhesion-preventing material for soil or cement (a hardened body of a hydraulic composition by being attached to a various kinds of construction materials. And the use of the sheet for civil engineering and construction as the friction reducing material and/or the adhesion-preventing material is also included in one of preferable embodiments of the present invention.

If using the sheet for civil engineering and construction, an adhesive or a pressure sensitive adhesive may be applied to an object such as the steel material or the mold form before the sheet is attached to the object, or an adhesive layer or a pressure sensitive adhesive layer may be previously formed on the substrate surface to which the sheet is attached. The adhesive or the pressure sensitive adhesive is not particularly limited and those which are used commonly may be used. In view of the efficiency of the application work, a solvent type synthetic rubber adhesive is preferably used. Furthermore, in view of the work environments, an odorless (solvent free type or water-based type) adhesive may be used. Due to the sheet shape, the sheet of the present invention can more decrease the solvent odor generated from the solvent type adhesive as compared with the application type agent, and the sheet is more easily attached as compared with the application of the adhesive.

The sheet for civil engineering and construction of the present invention has the above-mentioned configuration. Therefore, the sheet has a remarkably improved pulling property (friction reducing property) , that is, the pulling property (the friction reducing property) 2 to 3 times or more as much as that of a conventional product. Accordingly, the sheet can remarkably improve the workability if being attached to, for example, various kinds of piles used in the foundation work of construction fields and civil engineering fields and to the mold form used in various production processes.

### Best Mode for Carrying out the Invention

The present invention will be described below in more detail with reference to Examples, but not limited to these Examples. The terms, "part" and "%" represent "part by weight" and "% by weight", respectively, unless otherwise specified.

The weight average molecular weight (Mw) in the following Production Examples was measured by a high performance GPC apparatus HLC-8120 GPC (manufactured by Tosoh Corp.) using a TSK standard polystyrene PS-oligomer kit (product of Tosoh Corp.) as a standard substance for molecular weight calibration and tetrahydrofuran (containing a stabilizer) (special grade chemicals: product of Wako Pure Chemical Industries Ltd.) as a solvent. Also, the glass transition temperature (Tg) was measured (heating rate: 10°C/min) according to testing methods for transition temperatures of plastics in JIS K7121-1987 using a differential scanning calorimeter DSC 6200 (manufactured by Seiko Instruments Inc.). Furthermore, the coefficient of kinetic friction was measured as described above.

### Production Example 1

### [Binder resin (alkaline water-soluble resin)]

An alkaline water-soluble resin was produced by the following method. That is, 1.8 kg of acrylic acid, 10.2 kg of ethyl acrylate, 24 g of 2,2'-azobis(2,4-dimethylvaleronitrile) as a polymerization initiator, and 28 kg of methyl alcohol as a solvent were loaded to a tank reactor with 100 L capacityprovided with a thermometer, a stirring blade, a refluxing condenser, and a dropping apparatus. Also, a mixed solution containing 2.7 kg of acrylic acid, 5.4 kg of methyl acrylate, 9.9 kg of methyl methacrylate, 66 g of 2,2'-azobis(2,4-dimethylvaleronitrile), 2 kg of and methyl alcohol was loaded to the dropping apparatus.

The above-mentioned methyl alcohol solution was heated at 65°C in nitrogen gas atmosphere while being stirred for carrying out the reaction for 20 minutes. Consequently, the polymerization degree of the content was adjusted to 72%. Successively, while the inner temperature was kept at 65°C, the mixed solution was evenly added dropwise to the reactor from the dropping apparatus for 2 hours. On completion of the dropping, the content was further aged at 65°C for 3 hours. On completion of the reaction, 60 kg of methyl ethyl ketone was mixed with the resulting content to produce a 25% by weight solution of an alkaline water-soluble resin. Hereinafter, the alkaline water-soluble resin is sometimes referred to as ASP.

The produced alkaline water-soluble resin had an acid value of 117 mg KOH/g. The alkaline water-soluble resin had a weight average molecular weight of 156000 and a number average molecular weight of 69000, and glass transition temperature (Tg) was observed at 10°C and 67°C by the measurement with the differential scanning calorimeter. The solubility of the binder resin in ion-exchanged water at 25°C was less than 0.5% and that in the alkaline water-solubility was 100%.

### Production Example 2

### [Water-absorbing resin]

A commercially available crosslinked polysodium acrylate (trade name: Aqualic CA ML-70, average particle diameter 50 µm, product of Nippon Shokubai Co., Ltd.) was used as the water-absorbing resin. Hereinafter, the crosslinked polysodium acrylate is sometimes referred to as SAP.

### Example 1

The ASP (the alkaline water-soluble resin) solution and SAP (water-absorbing resin) were mixed in proper amounts in order that the ratio by weight of the ASP solid matter and the SAP was adjusted to 1 : 1 to obtain a lubricant composition (a resin solution) to be a lubricant layer. The lubricant composition was applied to a fabric (90 g/m², 0.23 mm in thickness, polyester/cotton = 60/40, a mixed yarn fabric) cut in a size of 75x40 mm in order that the coating amount of the resin solid matter was adjusted to 120 g/m² and then a lattice-like substrate (41 g/m² in basis weight, 0.08 mm in thickness, 0.5 to 2 mm in width of thin film (fiber), 2 mm in lattice hole width) was laminated on the lubricant composition layer (the lubricant layer) before drying the layer and the layer was dried to produce a sample sheet. The lattice fiber coefficient (average fiber width/thickness) of the lattice-like substrate was 15.6 (average fiber width: 1.25 mm, thickness: 0.08 mm). Table 1 shows the coefficient of kinetic friction of the lattice-like substrate.

The produced sample sheet was attached to an iron plate with a synthetic rubber type adhesive in such a manner that the lattice-like substrate contacted with the iron plate, and the iron plate was vertically inserted into a soil cement milk layer with a depth of 35 mm in a 500 mL container. After the iron plate was kept standing for 2 days, it was pulled out of the hardened soil cement layer while the pulling load was measured. The test conditions were as follows. Table 1 shows the results.

### (Test conditions)

Iron plate: A standard test plate in JIS G3101-2004 (SS-400), thickness 4.5x70x70 mm, product of Nippon Testpanel Co., Ltd.;
Soil cement milk composition: cement/water/Kasaoka
clay/bentonite = 100/300/270/10 (ratio by weight);
Measurement apparatus for pulling load: Digital Push-Pull Gauge RX-20, manufactured by Aikoh Engineering Co., Ltd.

### Example 2

The pulling load was measured in the same manner as in Example 1, except that a fabric (90 g/m², 0.23 mm in thickness, polyester/cotton = 60/40, a mixed yarn fabric) was used in place of the lattice-like substrate. Table 1 shows the coefficient of kinetic friction of the fabric and the measurement results.

### Example 3

The pulling load was measured in the same manner as Example 1, except that a water-soluble resin (Fueki Glue (starch glue) , product of Fuekinori Kogyo Co., Ltd.) was used in place of the ASP solution. Table 1 shows the measurement results.

### Example 4

The pulling load was measured in the same manner as in Example 1, except that two sheets of the sample sheet used in Example 1 were laminated and used. Table 1 shows the measurement results.

### Example 5

The pulling load was measured in the same manner as in Example 1, except that, before the sample sheet was attached to the iron plate in Example 1, 880 g/m² of the resin solution produced by mixing the ASP solution and SAP in proper amounts in order that the weight ratio of ASP solid matter and SAP was adjusted to 1 : 1 was applied and then the sample sheet was attached thereon. Table 1 shows the measurement results.

**[Table 1]**

| | Example 1 | Example 2 | Example 3 | Example 4 | Example 5 |
|---|---|---|---|---|---|
| sheet configuration | fabric/lubricant layer/lattice-like substrate | fabric/lubricant layer/fabric | fabric/lubricant layer/lattice-like substrate | double fabric | combination of ASP and SAP application |
| pulling load (t/m²) | 0.13 | 0.3 | 0.18 | 0.11 | 0.11 |
| coefficient of kinetic friction of substrate | 0.16 | 0.33 | 0.16 | 0.16 | 0.16 |

In Table 1, the term "coefficient of kinetic friction of substrate" means the coefficient of kinetic friction of the substrate attached to the iron plate.

### Example 6

Two sheets of the sample sheet produced in Example 1 with a size of 1 m in width x 1 m in length were attached to a wide flange beam having 1200 mm in length, H-300×300×10×15 (300 mm in flange face width, 300 mm in web face width, 10 mm in web thickness, and 15 mm in flange thickness) and the wide flange beam was built up in a soil cement milk layer with a depth of 1000 mm in a cylindrical container (having a bottom) with a diameter of 650 mm and a height of 1200 mm . After the flange beam was kept standing for 1 month, it was pulled out of the hardened soil cement milk layer while the pulling load was measured using a spring balance. The test conditions are as follows. Table 2 shows the measurement results.

### (Test conditions)

Soil cement milk composition: cement/water/Kasaoka
clay/bentonite = 600/2500/1600/60 (ratio by weight)
(compressive strength: 20 kg/cm²)
Measurement apparatus for pulling load: Folk lift

### Example 7

The pulling load was measured in the same manner as in Example 6, except that the sample sheet produced in Example 2 was used in place of the sample sheet used in Example 1. Table 2 shows the measurement results.

**[Table 2]**

| | Example 6 | Example 7 |
|---|---|---|
| sheet configuration | Scale-up of Example 1 | Scale-up of Example 2 |
| pulling load (t/m²) | 0.2 | 0.5 |
| coefficient of kinetic friction of substrate | 0.16 | 0.33 |

### Comparative Example 1

The lubricant compositionproduced inExample 1 was applied to a fabric (90 g/m², 0.23 mm in thickness, polyester/cotton = 60/40, a mixed yarn fabric) cut in a size of 75x40 mm in order that the coating amount of the resin solid matter was adjusted to 120 g/m² and dried to produce a sample sheet. Table 3 shows the coefficient of kinetic friction of the fabric.

The produced sample sheet was attached to an iron plate in such a manner that the fabric contacted with the iron plate and the iron plate was vertically inserted into a soil cement milk layer with a depth of 35 mm in a 500 mL container. After the iron plate was kept standing for 2 days, the iron plate was pulled out of the hardened soil cement layer while the pulling load was measured. The test conditions were same as those in Example 1. Table 3 shows the results.

### Comparative Example 2

The pulling load measurement test was tried in the same manner as in Comparative Example 1, except a polyethylene (PE) film was used in place of the fabric. However, the lubricant composition was separated from the polyethylene film, which fails to produce a sample sheet. Table 3 shows the coefficient of kinetic friction of the polyethylene film.

### Comparative Example 3

The pulling load measurement test was tried in the same manner as in Comparative Example 1, except the lattice-like substrate used in Example 1 was used in place of the fabric. However, the lubricant composition was separated from the lattice-like substrate, which fails to produce a sample sheet.

**[Table 3]**

| | Comparative Example 1 | Comparative Example 2 | Comparative Example 3 |
|---|---|---|---|
| sheet configuration | lubricant layer/fabric | lubricant layer/PE | lubricant layer/lattice―like substrate |
| pulling load (t/m²) | 0.34 | non sample-production, separation | non sample-production, separation |
| coefficient of kinetic friction of substrate | 0.33 | 0.2 | 0.16 |

The present application claims priority under 35 U.S.C.§119 to Japanese Patent Application No.2004-331974 filed November 16, 2004, entitled "SHEET FOR CIVIL ENGINEERING AND CONSTRUCTION." The contents of that application are incorporated herein by reference in their entirely.

## Claims

1. A sheet for civil engineering and construction comprising a lubricant layer sandwiched between two or more substrates,
wherein at least one of the substrates has a coefficient of kinetic friction (µ) of 0.45 or lower.

2. A sheet for civil engineering and construction comprising a lubricant layer sandwiched between two or more substrates,
wherein at least one of the substrates is a lattice-like substrate.

3. The sheet for civil engineering and construction according to claim 1,
wherein the material for the substrate is a film or sheet of a synthetic resin.

4. The sheet for civil engineering and construction according to claim 2,
wherein the material for the lattice-like substrate is polyethylene.

5. The sheet for civil engineering and construction according to claim 2,
wherein at least one of the lattice-like substrates has a coefficient of kinetic friction (µ) of 0.45 or lower.
